# EUROPEAN PATENT APPLICATION

(11) **EP 2 012 538 A1**
(43) Date of publication of application: **07.01.2009**
(21) Application number: 08158801.4
(22) Date of filing: 23.06.2008
(51) Int. Cl.: H04N 7/167

(54) **Apparatus and method for transmitting and receiving video data in digital broadcasting service**

(30) Priority: 05.07.2007 KR 20070067356
(71) Applicant: Samsung Electronics Co., Ltd., Suwon-si, Gyeonggi-Do (KR)
(72) Inventor: Kim, Chang Soon, Gyeonggi-do (KR); Song, Jung Kee, Gyeonggi-do (KR)
(74) Representative: Harrison Goddard Foote

(57) **Abstract**

A method and apparatus for transmitting and receiving video data in a digital broadcast are provided. The digital broadcast transmitting method includes encrypting selected frames of video data into digital broadcast data, and transmitting the digital broadcast data. The digital broadcast receiving method includes receiving video data in a digital broadcast, decrypting encrypted frames of the received video data, and decoding the encrypted frames of the received video data and reproducing the decoded video data.

## Description

### BACKGROUND OF THE INVENTION

### 1. Field of the Invention:

The present invention relates to digital broadcasting. More particularly, the present invention relates to a method and apparatus for transmitting and receiving video data in a digital broadcast.

### 2. Description of the Related Art:

Digital broadcasting involves the broadcasting of broadcast signals carrying digitally coded and modulated data. Digital broadcast receivers receive various broadcast signals, and reproduce the received signals through demodulation and decoding. Digital broadcast receivers include a tuner, a broadcast data demodulator, and a broadcast data decoder. Digital Multimedia Broadcasting (DMB) and Digital Video Broadcasting (DVB) are representative examples of conventional digital broadcasting.

Digital broadcasting provides a plurality of service channels through a frequency channel. The service channels are used to transmit broadcast programs and information on the channels and programs.

With the recent popularization of mobile television such as DMB and DVB-Handheld (DVB-H) using portable terminals, the purchase and protection of content has attracted increasing attention. Content protection permits selective access to encrypted content, and is a technique that enables the implementation of business models for content providers. Hence, various types of content protection techniques have been adopted by different content providers.

However, high-level security requires that encrypted data be transmitted and that the received data be decrypted, which may cause heavy system load. Therefore, it is necessary to develop a mechanism for maintaining security of content and reducing system load.

### SUMMARY OF THE INVENTION

An aspect of the present invention is to address at least the above-mentioned problems and/or disadvantages and to provide at least the advantages described below. Accordingly, an aspect of the present invention is to provide a method and apparatus that can both maintain security and reduce a load on a broadcast transmitter and broadcast receiver while transmitting and receiving digital broadcast data.

According to one aspect of the present invention, a digital broadcast transmitting method is provided. The digital broadcast transmitting method includes encrypting selected frames of video data into digital broadcast data, and transmitting the digital broadcast data.

According to another aspect of the present invention, a digital broadcast receiving method is provided. The digital broadcast receiving method includes receiving video data in a digital broadcast, decrypting encrypted frames of the received video data, and decoding the encrypted frames of the received video data and reproducing the decoded video data.

According to yet another aspect of the present invention, a digital broadcast transmitting apparatus is provided. The digital broadcast transmitting apparatus includes a data processing unit for encoding video data, an encryption control unit for controlling encryption of selected frames of the encoded video data, and a broadcast transport unit for transmitting the encrypted selected frames of encoded video data according to at least one digital broadcasting protocol.

According to still another aspect of the present invention, a digital broadcast receiving apparatus is provided. The digital broadcast receiving apparatus includes a broadcast reception unit for receiving a digital broadcast according to at least one digital broadcasting protocol, a data processing unit for decrypting encrypted frames of video data in the received digital broadcast, and a control unit for controlling the reproduction of the decrypted video data.

In exemplary embodiments of the present invention, only selected frames of video data in a digital broadcast are encrypted. The receiver can only recover the original video image by decrypting the encrypted video frames. Thus, load related to encryption and decryption can be reduced. At the same time, the mere interception of video frames does not lead to a reproduction of the original video image, thereby assuring the security of the video data.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following detailed description taken in conjunction with the accompanying drawings, in which:

FIG. 1A illustrates a layered structure for transmitting video data in a digital broadcast;

FIG. 1B illustrates a layered structure for receiving video data in a digital broadcast;

FIG. 2 is a block diagram illustrating a digital broadcast transmitting apparatus according to an exemplary embodiment of the present invention;

FIG. 3 is a block diagram illustrating a digital broadcast receiving apparatus for a mobile terminal according to another exemplary embodiment of the present invention;

FIG. 4 is a flowchart illustrating a video data transmitting method using digital broadcasting according to another exemplary embodiment of the present invention; and

FIG. 5 is a flowchart illustrating a digital broadcast receiving method for a mobile terminal according to another exemplary embodiment of the present invention.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The below description is focused on the DVB-H system as an example of digital broadcasting. However, the present invention is not limited to the DVB-H system, and exemplary embodiments of the present invention may be applied to various systems including DVB-H, DMB, Media Forward Link Only (MediaFLO) and the like.

In digital broadcasting systems such as DVB-H, DMB, MediaFLO and the like, video data, audio data, information data and the like are separately packetized, multiplexed, transmitted and the like. Exemplary embodiments of the present invention are related to the encryption of video data for digital broadcasts.

For the purpose of description, a mobile communication terminal is described as an example of a mobile terminal of exemplary embodiments of the present invention. However, the present invention is not limited thereto. The mobile terminal of exemplary embodiments of the present invention is a terminal that can receive and reproduce digital broadcasts, and may be any information and communication appliance or multimedia appliance, such as a mobile communication terminal, a digital broadcast receiving terminal, a personal digital assistant, a smart phone, an International Mobile Telecommunications 2000 (IMT 2000) terminal, a Wideband Code Division Multiple Access (WCDMA) terminal, a Universal Mobile Telecommunications System (UMTS) terminal and the like.

In exemplary embodiments of the present invention, frames of video data are selectively encrypted to both maintain security of the video data and reduce loads related to encryption and decryption. That is, some selected frames of video data to be transmitted are encrypted, and thus a broadcast receiver can only recover the video data by decrypting the encrypted frames.

Video data may be comprised of multiple successive frames, and these frames may be displayed within a preset time duration to form screen images. Video frames may include three kinds of frames an Intra-coded frame (I-frame), a Predictive frame (P-frame) and a Bidirectional frame (B-frame).

An I-frame is a key frame that may include compressed raw video data and may correspond to a still image. A P-frame may be based on an I-frame before the P-frame. A B-frame may be based on an I-frame and P-frame before or after the B-frame. A P-frame or B-frame may include only information on changed values in an I-frame, and cannot become a still image by itself.

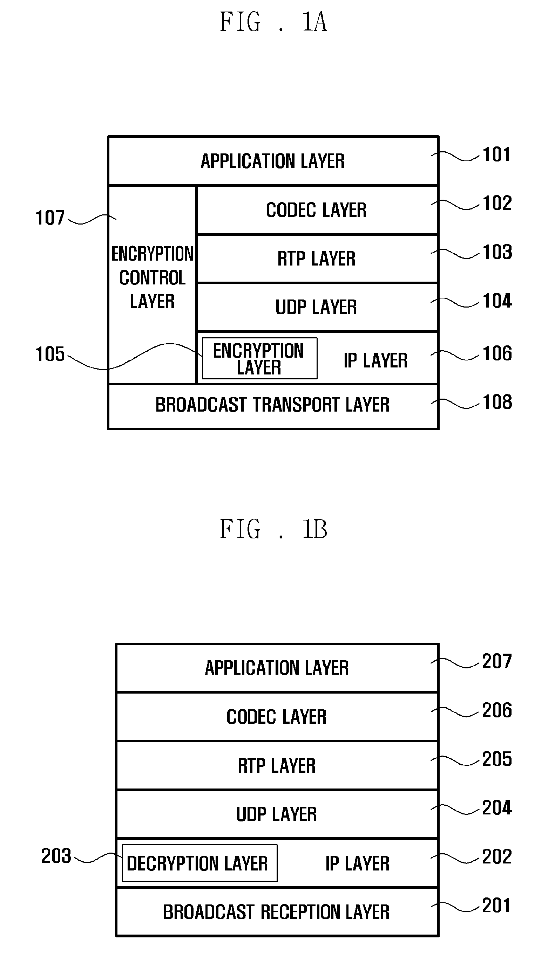

Next, layered structures are described for transmitting and receiving video data in a digital broadcast. FIG. 1A illustrates a layered structure for transmitting video data, and FIG. 1B illustrates a layered structure for receiving video data. The description is focused on video data, and protocols such as File Delivery over Unidirectional Transport (FLUTE) or the like, which may be used to transfer audio data, Electronic Service Guides (ESG) and the like, are not described.

Referring to FIG. 1A, to transmit video data, the layered structure in a digital broadcast transmitting apparatus 100 may include at least one of an application layer 101, a codec layer 102, a Real Time Protocol (RTP) layer 103, a User Datagram Protocol (UDP) layer 104, an encryption layer 105, an Internet Protocol (IP) layer 106, an encryption control layer 107, a broadcast transport layer 108 and the like.

The application layer 101 may generate digital broadcast data that may includes at least one of audio data and video data, and may pass the generated broadcast data to the codec layer 102.

The codec layer 102 may encode video data of the digital broadcast data according to a preset video compression format. Encoded video data may comprise at least one of 1-frames, B-frames, and P-frames. Preferably, the video compression format is at least one of H.264, MPEG compliant, and the like.

The RTP layer 103 may encode video data into RTP packets, and the UDP layer 104 may encode the RTP packets into UDP datagrams.

The encryption layer 105 may encrypt video frames of a selected type. Preferably, the encryption layer 105 encrypts video frames according to IP security (IPsec) or the like. Table 1 illustrates cryptographic algorithms related to IPsec.

**[Table 1]**

| | Types |
|---|---|
| 1 | Confidentiality Algorithm |
| 2 | Integrity Algorithm |
| 3 | PRF Algorithm |
| 4 | Diffe-Hellman(D-H) Group |

Referring to Table 1, IPsec-related algorithms may include algorithms regarding at least one of confidentiality, integrity, pseudo-random functions, Diffie-Hellman groups and the like. For IPsec, several suites of cryptographic algorithms are defined, and video data can be encrypted and decrypted using a selected suite.

The encryption control layer 107 may acquire information on video frames encoded by the codec layer 102, and may control the encryption layer 105 to selectively encrypt video frames on the basis of the acquired information. Preferably, I-frames are encrypted by the encryption layer 105.

The IP layer 106 may encode encrypted video data into at least one of IPv6 and IPv4 datagrams.

The broadcast transport layer 108 may transmit (broadcast) video data according to at least one protocol of a digital broadcasting system. The digital broadcasting system may be any one of DVB-H, DMB, MediaFLO and the like.

In an exemplary embodiment of the present invention, only selected video frames are encrypted. Thereby the receiver only needs to decrypt the encrypted video frames, and thus can reduce system load. More particularly, when only 1-frames are encrypted, receiving unencrypted B- and P-frames does not lead to a recovery of the original video data, thereby assuring the security of the video data and reducing system load.

Next, a layered structure in a digital broadcast receiver is described.

Referring to FIG. 1B, the layered structure for receiving video data may include at least one of a broadcast reception layer 201, an IP layer 202, a decryption layer 203, a UDP layer 204, an RTP layer 205, a codec layer 206, an application layer 207 and the like.

The broadcast reception layer 201 may receive digital broadcasts according to at least one protocol of a digital broadcasting system. The digital broadcasting system may be any one of DVB-H, DMB, MediaFLO and the like.

In the DVB-H system, a broadcast signal may be received according to time slicing, and Transport Stream (TS) packets that may be extracted from the received broadcast signal, and error correction may be performed using MultiProtocol Encapsulation (MPE) sections with Forward Error Correction (FEC) information.

The IP layer 202 may decode received broadcast data into at least one of IPv6 and IPv4 datagrams. That is, the IP layer 202 may separate received broadcast data into at least one of FLUTE/ALC data and RTP data. The FLUTE/ALC data may include EGS data, and the RTP data may include at least one of video data and audio data.

The decryption layer 203 may decrypt encrypted video frames and may pass the decrypted frames to the UDP layer 204, and may pass unencrypted video frames to the UDP layer 204 without decryption.

Preferably, the decryption layer 203 decrypts video data according to IPsec cryptographic algorithms or the like. To decrypt encrypted video data, it may be necessary to obtain information on the cryptographic algorithm used to encrypt the video data.

That is, to decrypt video data, the decryption layer 203 may use a cryptographic algorithm set in advance, or a cryptographic algorithm determined through negotiation with the corresponding transmitting side. More particularly, the decryption layer 203 may use reception rights including a key associated with a cryptographic algorithm permitting decryption of the video data.

The UDP layer 204 may decode IP datagrams having video data into UDP datagrams, and the RTP layer 205 may decode UDP datagrams having video data into RTP packets.

The codec layer 206 may decode video data according to a preset video compression format. Preferably, the video compression format is at least one of H.264, MPEG compliant and the like.

The application layer 207 may reproduce digital broadcast data including at least one of audio data, video data and the like.

Hereinabove, layered structures are described for transmitting and receiving video data in digital broadcasting. Next, a transmitting apparatus 100 and receiving apparatus 200 using the layered structures are described.

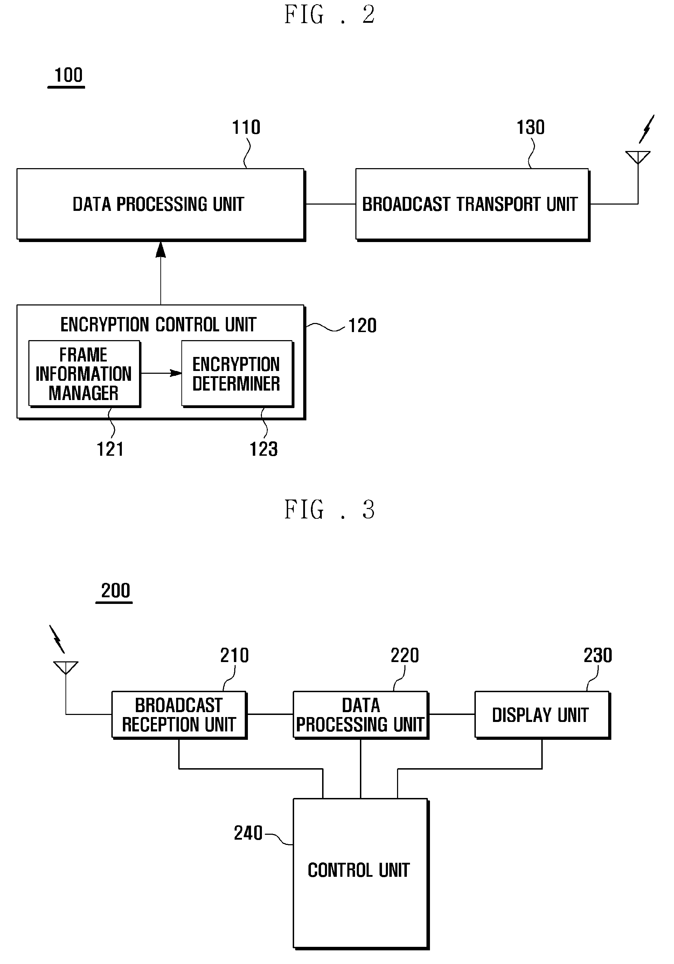

FIG. 2 is a block diagram illustrating a digital broadcast transmitting apparatus 100 according to an exemplary embodiment of the present invention.

Referring to FIG. 2, the digital broadcast transmitting apparatus 100 may include at least one of a data processing unit 110, encryption control unit 120, broadcast transport unit 130 and the like.

The data processing unit 110 may encode and encrypt content of digital broadcasts. The data processing unit 110 may include at least one of the layers 101 to 106 of the layered structure illustrated in FIG. 1A.

The encryption control unit 120 may control the data processing unit 110 to encrypt selected frames of video data. The encryption control unit 120 may include at least one of a frame information manager 121 and an encryption determiner 123.

The frame information manager 121 may store information on video frames encoded by the data processing unit 110. The frame information may indicate types of video frames (i.e. I, B or P).

The encryption determiner 123 may control the data processing unit 110 to encrypt the frames of video data selected on the basis of the frame information.

The broadcast transport unit 130 may transmit broadcast data including video data according to at least one protocol of a preset digital broadcasting system, and may include the broadcast transport layer 108 of the layered structure illustrated in FIG. 1A.

FIG. 3 is a block diagram illustrating a digital broadcast receiving apparatus 200 for a mobile terminal according to another exemplary embodiment of the present invention.

Referring to FIG. 3, the digital broadcast receiving apparatus 200 for a mobile terminal may includes at least one of a broadcast reception unit 210, a data processing unit 220, a display unit 230, a control unit 240 and the like.

The broadcast reception unit 210 may receive digital broadcasts. The broadcast reception unit 210 may receive broadcast data using a set physical channel under the control of the control unit 240. The broadcast reception unit 210 may receives broadcast data corresponding to a service channel selected by the user.

In the DVB-H system, the broadcast reception unit 210 may receive a broadcast signal according to time slicing, may extract TS packets from the received broadcast signal, and may perform error correction using MPE sections with FEC information.

The data processing unit 220 may decrypt encrypted frames of received video data, and may decode the received video data according to a preset format. The data processing unit 220 may include at least one of the layers 202 to 206 of the layered structure illustrated in FIG. 1B.

The display unit 230 may display at least one of various menus of the mobile terminal, information input by the user, function setting information, information to be provided to the user and the like. More particularly, the display unit 230 may display video data of a digital broadcast from at least one of the broadcast reception unit 210, the control unit 240 and the like. The display unit 230 may include a panel comprising a Liquid Crystal Display (LCD) or the like. If the panel has a touch screen capability, the display unit 230 may perform in part or whole the function of an input unit.

The control unit 240 may control signal exchanges between internal components including at least one of the broadcast reception unit 210, the data processing unit 220 the display unit 230 and the like. The control unit 240 may include a control module.

The mobile terminal may include any of a communication module for communicating with a mobile communication network, an audio module for processing audio data, an input unit for receiving an input signal from the user and the like. The mobile terminal may also include a memory unit and/or storage medium to store user data and application programs. Further, the mobile terminal may selectively include auxiliary units, such as a storage media slot enabling insertion of an external storage medium such as a memory card for data storage, a camera module, a connection terminal enabling data exchange with an external digital device, a charging terminal, a digital audio playback module such as an MP3 player and the like.

With the trend of digital convergence, portable devices are becoming extremely diversified. Hence, it should be apparent to those skilled in the art that the mobile terminal may further include units corresponding to those described above or the like.

Hereinabove, a digital broadcast transmitting apparatus 100 and a digital broadcast receiving apparatus 200 for a mobile terminal are described. Next, methods are described for transmitting and receiving video data in a digital broadcast.

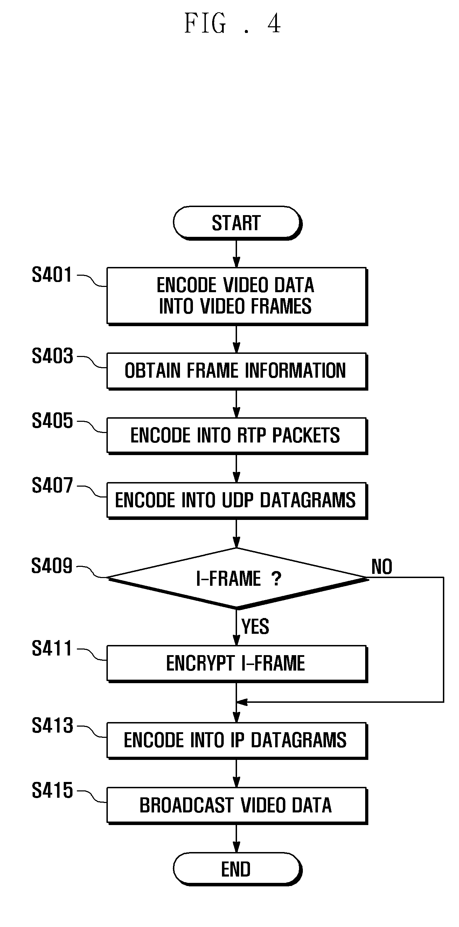

FIG. 4 is a flow chart illustrating a video data transmitting method in digital broadcasting according to another exemplary embodiment of the present invention.

Referring to FIG. 4, the data processing unit 110 of the digital broadcast transmitting apparatus 100 may encode video data in step S401. The encoding may be according to the H.264 format. The encoded video data may comprises streaming data of at least one of I-, B- and P-frames. The encryption control unit 120 may determine type information (i.e. I, B or P) of the encoded video frames in step S403.

The data processing unit 110 may encode the video data into RTP packets in step S405. The data processing unit 110 may encode the RTP packets having video data into UDP datagrams in step S407.

The encryption control unit 120 may determine the type of frames of the video data using the frame information obtained at step S403 in step S409.

If a video frame is an I-frame, the encryption control unit 120 may control the data processing unit 110 to encrypt the video frame in step S411. If a video frame is not an I-frame, the encryption control unit 120 may control the data processing unit 110 to not encrypt the video frame.

The data processing unit 110 encodes video data composed of encrypted frames and unencrypted frames into IP datagrams and passes the IP datagrams to the broadcast transport unit 130 in step S413.

The broadcast transport unit 130 may transmit (broadcast) the video data as packets according to at least one protocol of a digital broadcasting system in step S415.

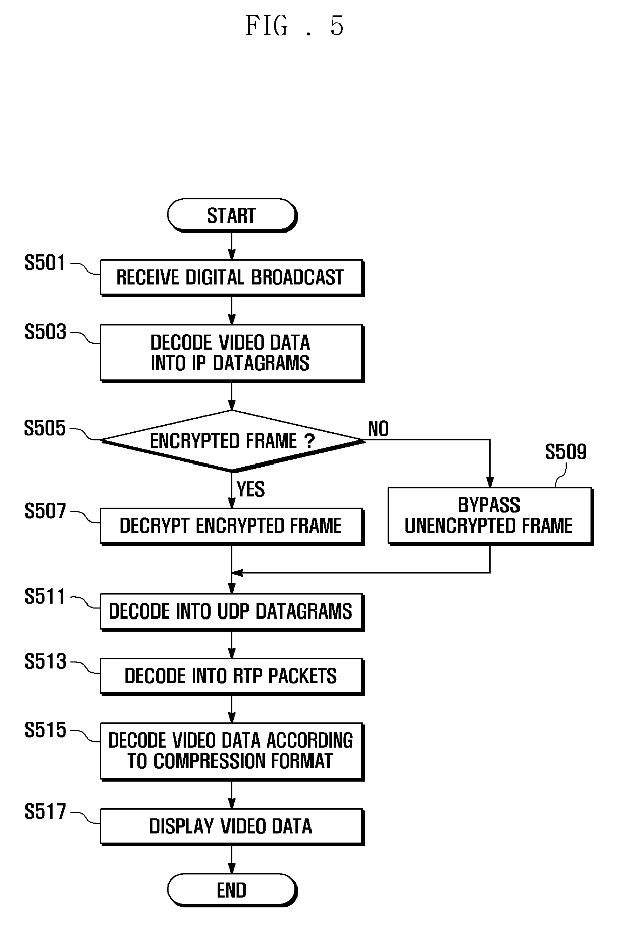

Next, a method is described for receiving video data in digital broadcasting. FIG. 5 is a flow chart illustrating a digital broadcast receiving method for a mobile terminal according to another exemplary embodiment of the present invention.

Referring to FIG. 5, the control unit 240 of the digital broadcast receiving apparatus 200 may control the broadcast reception unit 210 to receive a digital broadcast on a selected channel according to at least one protocol of a digital broadcasting system, and may pass video data of the received digital broadcast to the data processing unit 220 in step S501.

The control unit 240 may control the data processing unit 220 to decode the received video data into IP datagrams in step S503.

The control unit 240 may determine whether frames of the video data are encrypted in step S505. This determination can be performed using headers of the video frames.

If a video frame is encrypted, the control unit 240 may control the data processing unit 220 to decrypt the encrypted video frame in step S507. If a video frame is not encrypted, the control unit 240 may control the data processing unit 220 to not decrypt the video frame in step S509.

To decrypt encrypted video data, it may be necessary to obtain information on the cryptographic algorithm used to encrypt the video data. The control unit 240 may use a cryptographic algorithm set in advance, or a cryptographic algorithm determined through a negotiation with the corresponding transmitting side. More particularly, the control unit 240 may use reception rights including a key associated with a cryptographic algorithm permitting decryption of encrypted video data, as the cases of Digital Rights Management (DRM) and Conditional Access Systems (CAS).

The control unit 240 may control the data processing unit 220 to decode IP datagrams having video data into UDP datagrams in step S511, and to decode UDP datagrams having video data into RTP packets in step S513.

The control unit 240 may control the data processing unit 220 to decode RTP packets having video data according to a video compression format (preferably, H.264, MPEG, or the like) in step S515. The control unit 240 may control the display unit 230 to display the decoded video data in step S517.

In the above description of exemplary embodiments, only I-frames of video data have been described as being encrypted and decrypted. However, the present invention is not limited thereto.

For example, only B-frames or only P-frames of video data may be encrypted and decrypted, or five consecutive frames may be encrypted and a next five consecutive frames may not be encrypted. In these cases, receiving unencrypted video frames does not lead to the recovery of the original video data, thereby assuring security for video data and reducing a load related to encryption and decryption.

While the invention has been described with reference to certain exemplary embodiments thereof, it will be understood by those skilled in the art that various changes in form and details may be made therein without departing from the spirit and scope of the invention as defined by the appended claims and their equivalents.

## Claims

1. A digital broadcast transmitting/receiving method, the method comprising:
encrypting, by a digital broadcast transmitting apparatus (100), selected frames of video data (S411);
transmitting digital broadcast data including video data comprising the selectively encrypted frames (S415);
receiving, by a digital broadcast receiving apparatus (200), the digital broadcast data (S501);
decrypting encrypted frames of video data from the received digital broadcast data (S507); and
reproducing the video data (S517).

2. The method of claim 1, wherein the encrypting of the selected frames of video data (S411) comprises encrypting I-frames of the video data.

3. The method of claim 2, wherein the encrypting of the selected frames of video data (S411) is performed using a pre-negotiated algorithm including at least one of a confidentiality algorithm, an integrity algorithm, a pseudo-random function, and a Diffie-Hellman group.

4. The method of claim 1, wherein the decrypting of the encrypted frames of video data (S507) comprises decrypting 1-frames of the video data with reference to video frame headers.

5. The method of claim 4, wherein the decrypting of the encrypted frames of video data (S507) is performed using a pre-negotiated algorithm including at least one of a confidentiality algorithm, a integrity algorithm, a pseudo-random function, and a Diffie-Hellman group.

6. A digital broadcast transmitting/receiving system, the system comprising:
a digital broadcast transmitting apparatus (100) for encrypting selected frames of video data, and for transmitting digital broadcast data including video data comprising the selectively encrypted frames; and
a digital broadcast receiving apparatus (200) for receiving the digital broadcast data, for decrypting encrypted frames of video data from the received digital broadcast data, and for decoding and reproducing the video data.

7. The system of claim 6, wherein the digital broadcast transmitting apparatus (100) comprises:
a data processing unit (110) for encrypting selected frames of video data;
an encryption control unit (120) for controlling the data processing unit (110) to encrypt the selected frames; and
a broadcast transport unit (130) for transmitting the selectively encrypted frames according to at least one digital broadcasting protocol.

8. The system of claim 7, wherein the encryption control unit (120) comprises:
a frame information manager (121) for managing information on frames of the video data; and
an encryption determiner (123) for controlling encryption of selected frames of the video data using the frame information.

9. The system of claim 7, wherein the encryption control unit (120) controls encryption of 1-frames of the video data.

10. The system of claim 7, wherein the data processing unit (110) encrypts selected frames of the video data using a pre-negotiated algorithm including at least one of a confidentiality algorithm, an integrity algorithm, a pseudo-random function, and a Diffie-Hellman group.

11. The system of claim 6, wherein the digital broadcast receiving apparatus (200) comprises:
a broadcast reception unit (210) for receiving the digital broadcast data;
a data processing unit (220) for decrypting encrypted frames of video data from the received digital broadcast data; and
a control unit (240) controlling the reproduction of the decrypted video data.

12. The system of claim 11, wherein the data processing unit (220) decrypts encrypted frames of the video data and comprises a decryption layer (203) to bypass unencrypted frames.

13. The system of claim 11, wherein the data processing unit (220) decrypts I-frames of the video data with reference to video frame headers.

14. The system of claim 11, wherein the data processing unit (220) decrypts encrypted frames of the video data using a pre-negotiated algorithm including at least one of a confidentiality algorithm, an integrity algorithm, a pseudo-random function, and a Diffie-Hellman group.
